# EUROPEAN PATENT APPLICATION

(11) **EP 4 534 886 A1**
(43) Date of publication of application: **09.04.2025**
(21) Application number: 23811914.3
(22) Date of filing: 26.05.2023
(51) Int. Cl.: F16L 59/04, H01M 10/625, H01M 10/643, H01M 10/647, H01M 10/6555, H01M 10/658

(54) **HEAT TRANSFER SUPPRESSION SHEET AND BATTERY PACK**

(30) Priority: 27.05.2022 JP 2022086807
(71) Applicant: IBIDEN CO., LTD., Ogaki-shi, Gifu 503-8604 (JP)
(72) Inventor: KUMANO Keiji, Ibi-gun, Gifu 501-0695 (JP); IDO Takahiko, Ibi-gun, Gifu 501-0695 (JP)
(74) Representative: Hoffmann Eitle
(86) International application number: PCT/JP2023/019810
(87) International publication number: WO 2023/229042

(57) **Abstract**

To provide a heat transfer suppression sheet that can provide strength to retain a shape of a heat transfer suppression sheet even applied with a compressive stress and that can provide a high inorganic particle retention performance, thereby maintaining an excellent heat insulation performance, and a battery pack including the heat transfer suppression sheet. A heat transfer suppression sheet (10) includes a matrix (14) containing an inorganic particle (4) and an organic fiber (1) three-dimensionally oriented in the matrix (14). The organic fiber (1) includes a fusion portion (5) covering at least a portion of a surface thereof, and the organic fibers (1) are fused to each other by the fusion portion (5).

## Description

### TECHNICAL FIELD

The present invention relates to a heat transfer suppression sheet and a battery pack including the heat transfer suppression sheet.

### BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.

In addition, a lithium ion secondary battery, which has higher capacity and is capable of higher output than a lead-acid battery, a nickel-metal hydride battery, or the like, is mainly used for the battery cells. When a certain battery cell suddenly rises in temperature due to an internal short circuit or overcharging of the battery, and then causes thermal runaway that continues to generate heat, the heat from the battery cell that has experienced thermal runaway may propagate to other adjacent battery cells, thereby causing thermal runaway in other battery cells.

As a method of suppressing the propagation of heat from the battery cell that has experienced thermal runaway as described above, a method of interposing a heat insulation sheet between battery cells is generally used.

For example, Patent Literature 1 discloses a heat insulation sheet for a battery pack, which contains a first particle composed of a silica nanoparticle and a second particle composed of a metal oxide, in which the content of the first particle is limited. In addition, Patent Literature 1 discloses that the heat insulation sheet may contain a binding material composed of at least one kind selected from a fiber, a binder, and a heat-resistant resin.

In addition, the above Patent Literature 1 discloses that dry silica or wet silica can be used as the first particle, and this heat insulation sheet can be produced by a dry molding method or a wet papermaking method.

### CITATION LIST

### PATENT LITERATURE

Patent Literature 1: JP2021-34278A

### SUMMARY OF INVENTION

### TECHNICAL PROBLEM

Examples of a binder for producing a heat insulation sheet (heat transfer suppression sheet) include a wet heat adhesive binder fiber, and the wet heat adhesive binder fiber needs to be kept in a wet state during production in order to exhibit adhesiveness. Therefore, in the case of using the wet heat adhesive binder fiber, the heat insulation sheet needs to be produced by a wet papermaking method.

However, in order to further improve a heat insulation performance, in the case of using dry silica or silica aerogel having a low thermal conductivity, there is a problem that the heat insulation sheet cannot be produced by a wet papermaking method. This is because when a material containing dry silica is molded into a sheet by a wet papermaking method, the dry silica aggregates with water and the thermal conductivity increases. In general, silica aerogel is difficult to disperse in water, so that when a material containing silica aerogel is molded by a wet papermaking method, it is not possible to obtain a heat insulation sheet in which the material is evenly dispersed, resulting in quality deterioration.

On the other hand, when a heat insulation sheet is produced by a dry molding method using an inorganic particle such as dry silica or silica aerogel, the inorganic particle may fall off (hereinafter also referred to as powder falling) due to a pressure or impact. In particular, in recent battery packs, the capacity of the battery cells has been further improved, so that an expansion rate during charging and discharging has been increased. Therefore, in the case where a heat insulation sheet is disposed between battery cells of a battery pack, when strength of the entire heat insulation sheet is low, the heat insulation sheet is compressed by the expansion of the battery cells during charging and discharging of the battery cells, and powder falling occurs, resulting in a decrease in heat insulation performance. As a result, when the battery cell experiences thermal runaway and reaches a high temperature, the heat insulation sheet may not be able to exhibit an effect and a thermal chain reaction may occur. Therefore, there is a need for a heat insulation sheet that has high strength to retain a shape, can suppress powder falling, and can maintain an excellent heat insulation property, and a production method therefor.

Although the heat insulation sheet disclosed in the above Patent Literature 1 maintains an excellent heat insulation property even when a compressive stress increases, further improvements in heat insulation property, strength, and performance to suppress powder falling are required.

The present invention has been made in view of the above problems, and an object thereof is to provide a heat transfer suppression sheet that can provide strength to retain a shape of a heat transfer suppression sheet even applied with a compressive stress and that can provide a high inorganic particle retention performance, thereby maintaining an excellent heat insulation performance, and a battery pack including the heat transfer suppression sheet.

### SOLUTION TO PROBLEM

The above object of the present invention is achieved by the following configuration [1] relating to a heat transfer suppression sheet.
[1] A heat transfer suppression sheet including:
   a matrix containing an inorganic particle; and
   an organic fiber three-dimensionally oriented in the matrix, in which
   the organic fiber includes a fusion portion covering at least a portion of a surface of the organic fiber, and
   the organic fibers are fused to each other by the fusion portion.
   Preferred embodiments of the present invention relating to the heat transfer suppression sheet relate to the following [2] to [13].
[2] The heat transfer suppression sheet according to [1], in which the matrix has a plurality of pores.
[3] The heat transfer suppression sheet according to [1] or [2], in which the matrix includes a fiber bundle formed by at least partially fusing a plurality of the organic fibers to each other by the fusion portion.
[4] The heat transfer suppression sheet according to [3], in which a gap is provided between the plurality of organic fibers constituting the fiber bundle.
[5] The heat transfer suppression sheet according to any one of [1] to [4], further includes a fiber layer on at least a portion of a first surface and a second surface of the heat transfer suppression sheet, the first surface and the second surface being perpendicular to a thickness direction of the heat transfer suppression sheet, wherein the fiber layer is formed by at least partially fusing a plurality of the organic fibers to each other by the fusion portion.
[6] The heat transfer suppression sheet according to [5], includes a composite layer between the fiber layer and a base layer including the matrix and the organic fiber, wherein the composite layer contains the plurality of the organic fibers at least partially fused to each other by the fusion portion and the inorganic particle fused to the organic fibers by the fusion portion.
[7] The heat transfer suppression sheet according to any one of [1] to [6], in which at least a portion of the inorganic particle is fused to the organic fiber by the fusion portion.
[8] The heat transfer suppression sheet according to any one of [1] to [7], in which
   the organic fiber is composed of a first organic material, and the fusion portion contains a second organic material, and
   a melting point of the second organic material is lower than a melting point of the first organic material.
[9] The heat transfer suppression sheet according to [8], in which the melting point of the second organic material is lower than the melting point of the first organic material by 60°C or more.
[10] The heat transfer suppression sheet according to [8] or [9], in which
   the first organic material is at least one kind selected from polyethylene terephthalate, a polypropylene, and nylon, and
   the second organic material is at least one kind selected from polyethylene terephthalate, a polyethylene, a polypropylene, and nylon.
[11] The heat transfer suppression sheet according to any one of [1] to [10], in which the inorganic particle is a particle composed of at least one kind of inorganic material selected from an oxide particle, a carbide particle, a nitride particle, and an inorganic hydrate particle.
[12] The heat transfer suppression sheet according to [11], in which the inorganic particle includes at least one kind of particle selected from a dry silica particle and silica aerogel.
[13] The heat transfer suppression sheet according to [12], in which the inorganic particle further includes at least one kind of particle selected from titania, zircon, zirconia, silicon carbide, zinc oxide, and alumina.
   The above object of the present invention is also achieved by the following configuration [14] relating to a battery pack.
[14] A battery pack including:
   a plurality of battery cells; and
   the heat transfer suppression sheet according to any one of [1] to [13], in which
   the plurality of battery cells are connected in series or in parallel.

### ADVANTAGEOUS EFFECTS OF INVENTION

Since the heat transfer suppression sheet according to the present invention includes a matrix containing an inorganic particle, and an organic fiber three-dimensionally oriented, and the organic fibers are fused to each other by a fusion portion to form a framework, excellent strength can be obtained, and accordingly, powder falling off can be suppressed, and a decrease in heat insulation effect due to compression deformation of the heat transfer suppression sheet can be prevented.

With the battery pack according to the present invention, since the heat transfer suppression sheet has high strength and a heat insulation performance retention effect as described above, thermal runaway of the battery cells in the battery pack and spread of flame to the outside of a battery case can be suppressed.

### BRIEF DESCRIPTION OF DRAWINGS

[Fig. 1] Fig. 1 is a photograph substituted for a drawing showing a structure of a heat transfer suppression sheet according to an embodiment of the present invention.
[Fig. 2] Fig. 2 is a photograph substituted for a drawing showing an enlarged view of the structure of the heat transfer suppression sheet according to the embodiment of the present invention.
[Fig. 3] Fig. 3 is a photograph substituted for a drawing showing a cross section of the heat transfer suppression sheet according to the embodiment of the present invention.
[Fig. 4] Fig. 4 is a cross-sectional view schematically showing a battery pack including the heat transfer suppression sheet according to the embodiment of the present invention.

### DESCRIPTION OF EMBODIMENTS

The inventors of the present invention have conducted intensive studies on a heat transfer suppression sheet that can solve the above problems.

As a result, it has been found that when organic fibers three-dimensionally oriented are fused to each other by a fusion portion in a matrix containing an inorganic particle, strength of the heat transfer suppression sheet can be improved, and accordingly a high heat insulation performance can be maintained.

Hereinafter, a heat transfer suppression sheet, a production method therefor, and a battery pack according to an embodiment of the present invention will be described in detail. Note that, the present invention is not limited to the embodiment described below, and can be freely changed and implemented without departing from the gist of the present invention.

### [Heat Transfer Suppression Sheet]

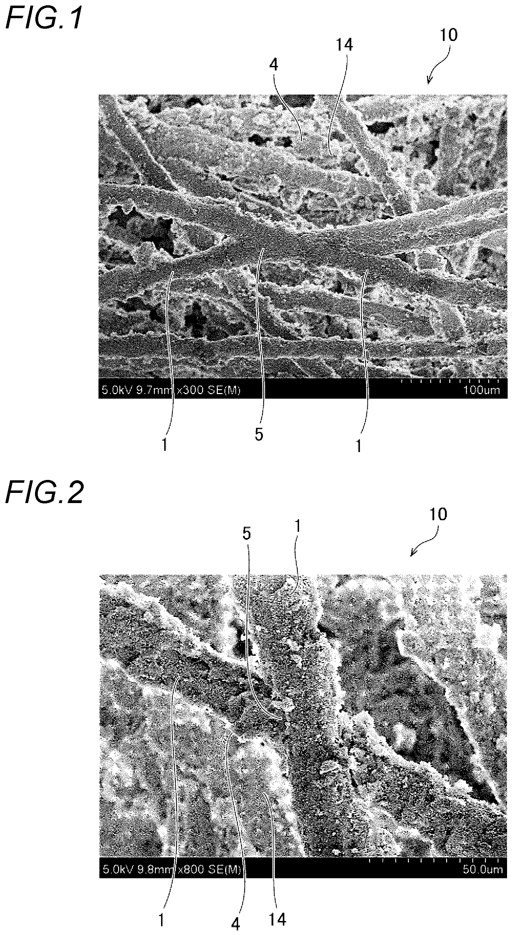

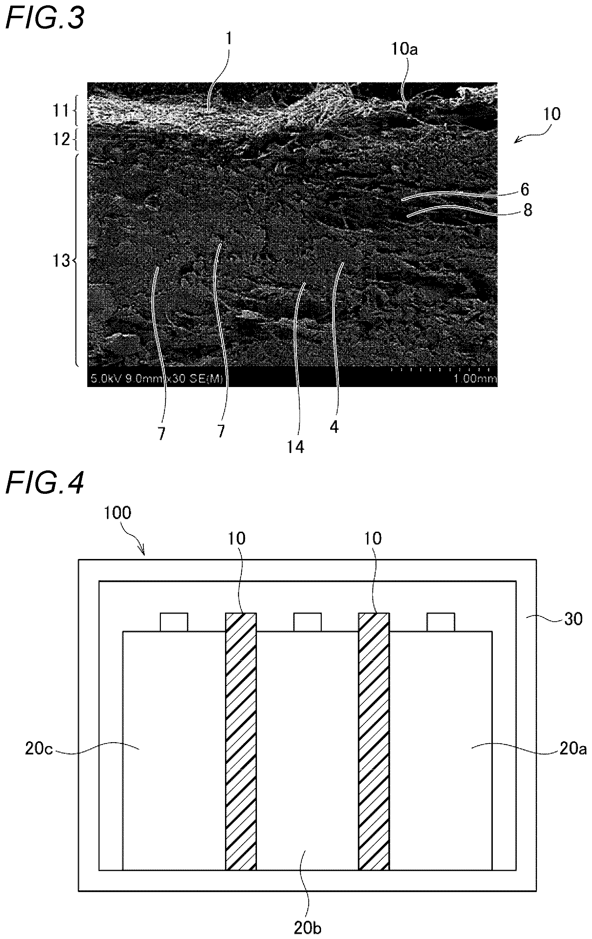

Fig. 1 is a photograph substituted for a drawing showing a structure of a heat transfer suppression sheet according to an embodiment of the present invention, and Fig. 2 is a photograph substituted for a drawing showing an enlarged view of the structure of the heat transfer suppression sheet according to the embodiment of the present invention. Fig. 3 is a photograph substituted for a drawing showing a cross section of the heat transfer suppression sheet according to the embodiment of the present invention. In addition, Fig. 4 is a cross-sectional view schematically showing a battery pack including the heat transfer suppression sheet according to the embodiment of the present invention.

As shown in Fig. 1 and Fig. 2, a heat transfer suppression sheet 10 according to the present embodiment includes a matrix 14 containing an inorganic particle 4 and an organic fiber 1 three-dimensionally oriented in the matrix 14. The organic fiber 1 includes a fusion portion 5 covering at least a portion of a surface thereof, and the organic fibers 1 are fused to each other by the fusion portion 5. Similarly, the inorganic particle 4 is also fused to the surface of the organic fiber 1, and accordingly, the surface of the organic fiber 1 is covered with the inorganic particle 4.

As shown in the cross-sectional view in Fig. 3, a plurality of pores 7 are formed in the matrix 14 of the heat transfer suppression sheet 10. Further, in the matrix 14, the organic fibers 1 are at least partially fused to each other by the fusion portion 5 (not shown in Fig. 3), to form a fiber bundle 6, and a gap 8 is formed between the organic fibers 1 constituting the fiber bundle 6.

Further, a fiber layer 11 is formed on at least a portion of a first surface 10a and a second surface (not shown) of the heat transfer suppression sheet 10 that are perpendicular to a thickness direction of the heat transfer suppression sheet 10. The fiber layer 11 is formed in a layer shape on the surface (first surface and second surface) of the heat transfer suppression sheet 10 by at least partially fusing the plurality of organic fibers 1 to each other by the fusion portion 5. In addition, a composite layer 12 is formed between the fiber layer 11 and a base layer 13 containing the matrix 14 and the organic fiber 1. The composite layer 12 is a layer in which a portion of the fiber layer 11 and a portion of the matrix 14 are mixed together. Specifically, the composite layer 12 is a region including a plurality of organic fibers 1 at least partially fused to each other by the fusion portion 5, and the inorganic particle 4 fused to the organic fiber 1 by the fusion portion 5.

Note that, the fiber bundle 6 is formed by entangling 10 or more organic fibers 1 with each other and partially fusing the organic fibers 1 to each other, and is disposed in any direction in the matrix 14 of the heat transfer suppression sheet 10. On the other hand, the fiber layer 11 is a layer formed by gathering 10 or more organic fibers 1 on the surface of the heat transfer suppression sheet 10, and extends in a direction substantially parallel to the surface, for example, in a stripe shape.

As a specific usage form of this heat transfer suppression sheet 10, as shown in Fig. 4, the heat transfer suppression sheet 10 can be used to be interposed between a plurality of battery cells 20a, 20b, and 20c. A battery pack 100 is constructed by housing the plurality of battery cells 20a, 20b, and 20c in a battery case 30 in a state where the battery cells 20a, 20b, and 20c are connected in series or in parallel (the connected state is not shown). Note that, the battery cells 20a, 20b, and 20c are, for example, preferably a lithium ion secondary battery, but is not particularly limited thereto, and may be applied to other secondary batteries.

In the heat transfer suppression sheet 10 according to the present embodiment configured in this manner, the organic fibers 1 are three-dimensionally oriented in the matrix 14, and the organic fiber 1 includes the fusion portion 5 covering at least a portion of the surface thereof. The fusion portion 5 refers to a portion where the surface of the organic fiber 1 has melted and then solidified again, and is formed during a process of producing the heat transfer suppression sheet 10, which will be described later. In the present embodiment, since the three-dimensionally oriented organic fibers 1 are fused to each other by the fusion portion 5, this structure serves as a framework to support the shape of the heat transfer suppression sheet 10 and to obtain high strength.

Similarly, in the present embodiment, since the fusion portion 5 on an outer peripheral surface of the organic fiber 1 also fixes the inorganic particle 4 to the organic fiber 1, an even higher powder falling suppression effect can be obtained. Therefore, for example, even when a portion of the battery cells 20a, 20b, and 20c expands during charging and discharging, causing a compressive stress or impact on the heat transfer suppression sheet 10, the shape can be retained, falling off of the inorganic particle 4 (powder falling) can be suppressed, and a decrease in heat insulation effect due to compressive deformation of the heat transfer suppression sheet 10 can be prevented.

In the present embodiment, as a mechanism with which the falling off of the inorganic particle 4 from the surface of the sheet can be suppressed, it is thought that, as described above, the organic fibers 1 are fused to each other by the fusion portion 5 to form a three-dimensional and strong framework, the shape of the heat transfer suppression sheet 10 is retained, and deformation or compression of the heat transfer suppression sheet 10 is suppressed. In addition, when the fiber layer 11 formed by fusing a plurality of organic fibers 1 to each other is formed on the surface of the heat transfer suppression sheet 10, this fiber layer 11 can absorb the impact applied to the heat transfer suppression sheet 10, and therefore the presence of the fiber layer 11 is also thought to be a factor in retaining the inorganic particle 4.

Note that, in Fig. 1 and Fig. 2, the inorganic particle 4 is fused to the entire outer peripheral surface of the organic fiber 1 by the fusion portion 5. However, in the present invention, the fusion portion 5 does not need to completely cover the outer peripheral surface of the organic fiber 1, and there may be a region where the fusion portion 5 is not present. In the heat transfer suppression sheet 10 according to the present embodiment, as a material for the organic fiber 1, a binder fiber having a core-sheath structure, which will be described later, can be used. However, when a sheath portion is peeled off during the production process, the organic fiber 1, which is a core portion, may be partially exposed. Even in such a case, the effect of retaining the inorganic particle 4 can be sufficiently obtained.

In addition, since the heat transfer suppression sheet 10 according to the present embodiment contains the organic fiber 1 having high flexibility, the flexibility of the heat transfer suppression sheet 10 can be improved, the organic fibers 1 are easily entangled with each other, and an effect of improving sheet strength can be obtained.

Further, in the present embodiment, since the matrix 14 has the plurality of pores 7 and the gap 8 is provided between the plurality of organic fibers 1 constituting the fiber bundle 6, the heat insulation performance can be improved. In addition, due to the presence of the gap 8, the organic fiber 1 is less likely to be restrained in the matrix 14, so that the flexibility and the strength of the heat transfer suppression sheet 10 can be further improved. The gap 8 does not need to be formed in the entire region between the plurality of organic fibers 1, and as long as the gap 8 is formed at least partially between the organic fibers 1, a heat transfer suppression effect can be obtained.

Further, the heat transfer suppression sheet 10 includes the fiber bundle 6 and the fiber layer 11, and therefore can have much higher sheet strength than the case where the organic fibers 1 are disposed in a dispersed manner. The fiber layer 11 is not simply disposed on the base layer 13, and the composite layer 12, in which a portion of the fiber layer 11 and a portion of the inorganic particle 4 constituting the matrix 14 are mixed together, is provided between the fiber layer 11 and the base layer 13, so that the fiber layer 11 is reliably restrained to the surface of the heat transfer suppression sheet 10. Therefore, a heat transfer suppression sheet 10 having high strength can be obtained.

Hereinafter, materials constituting the heat transfer suppression sheet according to the present embodiment will be described in detail.

### <Organic Fiber>

The organic fiber 1 imparts the flexibility to the heat transfer suppression sheet 10, and, by fusing the inorganic particle 4 and other organic fibers 1 to the surface thereof, has an effect of retaining the strength and the shape of the sheet. A single-component organic fiber can be used as the material for the organic fiber 1 in the heat transfer suppression sheet 10, and it is preferable to use a binder fiber having a core-sheath structure. The binder fiber having a core-sheath structure includes a core portion extending in a longitudinal direction of the fiber, and a sheath portion formed to cover an outer peripheral surface of the core portion. In addition, the core portion is composed of a first organic material, the sheath portion is composed of a second organic material, and a melting point of the first organic material is higher than a melting point of the second organic material. When the binder fiber having a core-sheath structure is used as the material, the core portion corresponds to the organic fiber 1 in the heat transfer suppression sheet 10. During the production of the heat transfer suppression sheet 10, the second organic material constituting the sheath portion is melted and then solidified again, so that the sheath portion becomes the fusion portion 5 in the heat transfer suppression sheet 10.

When the binder fiber having a core-sheath structure is used as the material for the organic fiber 1, the core portion, i.e., the first organic material constituting the organic fiber 1, is not particularly limited as long as it has a melting point higher than that of the sheath portion, i.e., the second organic material, present on the outer peripheral surface of the organic fiber 1. Examples of the first organic material include at least one kind selected from polyethylene terephthalate, a polypropylene, and nylon.

### (Content of Organic Fiber)

In the present embodiment, when a content of the organic fiber 1 in the heat transfer suppression sheet 10 is appropriately controlled, a sufficient framework reinforcement effect can be obtained.

The content of the organic fiber 1 is preferably 2 mass% or more, and more preferably 4 mass% or more, with respect to a total mass of the heat transfer suppression sheet 10. When the content of the organic fiber 1 is too large, the content of the inorganic particle 4 decreases relatively. Therefore, in order to obtain a desired heat insulation performance, the content of the organic fiber is preferably 10 mass% or less, and more preferably 8 mass% or less, with respect to the total mass of the heat transfer suppression sheet 10.

### (Fiber Length of Organic Fiber)

A fiber length of the organic fiber 1 is not particularly limited, and from the viewpoint of ensuring moldability and processability, an average fiber length of the organic fiber is preferably 10 mm or less.

On the other hand, from the viewpoint of making the organic fiber 1 function as a framework and ensuring compressive strength of the heat transfer suppression sheet, the average fiber length of the organic fiber 1 is preferably 0.5 mm or more.

### <Fusion Portion>

The fusion portion 5 is formed by heating and melting the surface of the organic fiber 1 or the sheath portion of the binder fiber having a core-sheath structure, and then cooling the same, and fuses the inorganic particle 4 to the surface of the organic fiber 1 and fuses the organic fibers 1 to each other. When the binder fiber having a core-sheath structure is used as the material for the organic fiber 1, the fusion portion 5 contains the second organic material constituting the sheath portion.

### (Second Organic Material)

The second organic material is not particularly limited as long as it has a melting point lower than that of the first organic material constituting the organic fiber 1. Examples of the second organic material include at least one kind selected from polyethylene terephthalate, a polyethylene, a polypropylene, and nylon.

Note that, the melting point of the second organic material is preferably 90°C or higher, and more preferably 100°C or higher. In addition, the melting point of the second organic material is preferably 150°C or lower, and more preferably 130°C or lower.

### <Inorganic Particle>

As the inorganic particle, a single kind of inorganic particle may be used, or two or more kinds of inorganic particles may be used in combination. From the viewpoint of a heat transfer suppression effect, as the kind of the inorganic particle, a particle composed of at least one kind of inorganic material selected from an oxide particle, a carbide particle, a nitride particle, and an inorganic hydrate particle is preferably used, and more preferably an oxide particle is used. The form thereof is not particularly limited. It is preferable to contain at least one kind selected from a nanoparticle, a hollow particle, and a porous particle. Specifically, a silica nanoparticle, a metal oxide particle, an inorganic balloon such as a microporous particle or a hollow silica particle, a particle composed of a thermally expandable inorganic material, a particle composed of a hydrous porous material, or the like can also be used.

When an average secondary particle diameter of the inorganic particle is 0.01 µm or more, the inorganic particle is easily available and an increase in production cost can be suppressed. When the average secondary particle diameter is 200 µm or less, a desired heat insulation effect can be obtained. Therefore, the average secondary particle diameter of the inorganic particle is preferably 0.01 µm or more and 200 µm or less, and more preferably 0.05 µm or more and 100 µm or less.

Note that, when two or more kinds of inorganic particles having different heat transfer suppression effects are combined, a heating element can be cooled in multiple stages and a heat absorption effect can be exhibited over a wider temperature range. Specifically, it is preferable to use a large-diameter particle and a small-diameter particle in combination. For example, in the case of using a nanoparticle as one of the inorganic particles, it is preferable to contain an inorganic particle composed of a metal oxide as the other inorganic particle. Hereinafter, the inorganic particle will be described in more detail, with a small-diameter inorganic particle as a first inorganic particle and a large-diameter inorganic particle as a second inorganic particle.

### <First Inorganic Particle>

### (Oxide Particle)

An oxide particle has a high refractive index and has a high effect of diffusely reflecting light, so that when the oxide particle is used as the first inorganic particle, radiant heat transfer can be suppressed, particularly in a high temperature range with abnormal heat generation or the like. As the oxide particle, at least one kind of particle selected from silica, titania, zirconia, zircon, barium titanate, zinc oxide, and alumina can be used. That is, among the above oxide particle that can be used as the inorganic particle, only one kind or two or more kinds of oxide particles may be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particle.

### (Average primary particle diameter of oxide particle: 0.001 µm or more and 50 µm or less)

Since the particle diameter of the oxide particle may influence an effect of reflecting radiant heat, when an average primary particle diameter thereof is limited to a predetermined range, an even higher heat insulation property can be obtained.

That is, when the average primary particle diameter of the oxide particle is 0.001 µm or more, a wavelength thereof is sufficiently larger than a wavelength of light that contributes to heating, and it diffusely reflects the light efficiently. Therefore, in a high temperature range of 500°C or higher, the radiant heat transfer of heat within the heat transfer suppression sheet can be suppressed, and the heat insulation property can be further improved.

On the other hand, when the average primary particle diameter of the oxide particle is 50 µm or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Note that, in the present invention, the average primary particle diameter can be determined by observing particles with a microscope, comparing the particles with a standard scale, and taking an average of any 10 particles.

### (Nanoparticle)

In the present invention, the nanoparticle refers to a nanometer-order particle having a spherical or nearly spherical shape and having an average primary particle diameter of less than 1 µm. The nanoparticle has a low density and thus suppresses the conductive heat transfer, and when the nanoparticle is used as the first inorganic particle, gaps are further finely dispersed, so that an excellent heat insulation property of suppressing convective heat transfer can be obtained. Therefore, it is preferable to use a nanoparticle since it can suppress the conduction of heat between adjacent nanoparticles during normal use of a battery in a normal temperature range.

Further, when the nanoparticle having a small average primary particle diameter is used as the oxide particle, even when the heat transfer suppression sheet is compressed by expansion due to thermal runaway of the battery cell and the internal density increases, an increase in conductive heat transfer of the heat transfer suppression sheet can be suppressed. This is thought to be because the nanoparticle tends to form fine gaps between particles due to a repulsive force caused by static electricity, and the bulk density thereof is low, so that it filled with the particle so as to provide a cushioning property.

Note that, in the present invention, when the nanoparticle is used as the first inorganic particle, the kind thereof is not particularly limited as long as the above definition of nanoparticle is met. For example, since a silica nanoparticle is a material having a high heat insulation property and has a few contact points between particles, the amount of heat conducted by the silica nanoparticle is smaller than that in a case of using a silica particle having a large particle diameter. In addition, since a generally available silica nanoparticle has a bulk density of about 0.1 (g/cm³), for example, even when battery cells disposed on both sides of the heat transfer suppression sheet thermally expand and a large compressive stress is applied to the heat transfer suppression sheet, the size (area) or the number of contact points between silica nanoparticles does not increase remarkably, and the heat insulation property can be maintained. Therefore, it is preferable to use a silica nanoparticle as the nanoparticle. Examples of the silica nanoparticle include wet silica, dry silica, and aerogel. A silica nanoparticle that is particularly suitable for the present embodiment will be described below.

Generally, the particles of wet silica are agglomerated, whereas the particles of dry silica can be dispersed. Since the conductive heat transfer is dominant in heat conduction in a temperature range of 300°C or lower, the dry silica in which particles can be dispersed can provide a more excellent heat insulation performance than the wet silica.

Note that, the heat transfer suppression sheet according to the present embodiment is preferably produced by a production method in which a mixture containing materials is processed into a sheet by a dry method. Therefore, as the inorganic particle, it is preferable to use dry silica or silica aerogel which has a low thermal conductivity.

### (Average primary particle diameter of nanoparticle: 1 nm or more and 100 nm or less)

When the average primary particle diameter of the nanoparticle is limited to a predetermined range, an even higher heat insulation property can be obtained.

That is, when the average primary particle diameter of the nanoparticle is 1 nm or more and 100 nm or less, the convective heat transfer and the conductive heat transfer of the heat within the heat transfer suppression sheet can be suppressed particularly in a temperature range of lower than 500°C, and the heat insulation property can be further improved. In addition, even when a compressive stress is applied, gaps remaining between the nanoparticles and contact points between many particles can suppress the conductive heat transfer, and the heat insulation property of the heat transfer suppression sheet can be maintained.

Note that, the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

### (Inorganic Hydrate Particle)

The inorganic hydrate particle exhibits a so-called "heat absorption effect" that the inorganic hydrate particle receives heat from a heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2Al(OH)₃ → Al₂O₃ + 3H₂O

Note that, as will be described later, the heat transfer suppression sheet 10 according to the present embodiment is preferably interposed between, for example, battery cells, but in a battery cell that has experienced thermal runaway, the temperature rapidly rises to over 200°C and continues to rise to about 700°C. Therefore, it is preferable that the inorganic particle is composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

### (Average secondary particle diameter of inorganic hydrate particle: 0.01 µm or more and 200 µm or less)

In the case where the inorganic hydrate particle is used as the first inorganic particle, when the average particle diameter thereof is too large, it takes a certain amount of time for the first inorganic particle (inorganic hydrate) near the center of the heat transfer suppression sheet 10 to reach the thermal decomposition temperature thereof, so that the first inorganic particle near the center of the sheet may not be completely thermally decomposed. Therefore, the average secondary particle diameter of the inorganic hydrate particle is preferably 0.01 µm or more and 200 µm or less, and more preferably 0.05 µm or more and 100 µm or less.

### (Particle Composed of Thermally Expandable Inorganic Material)

Examples of the thermally expandable inorganic material include vermiculite, bentonite, mica, and perlite.

### (Particle Composed of Hydrous Porous Material)

Specific examples of the hydrous porous material include zeolite, kaolinite, montmorillonite, acid clay, diatomaceous earth, wet silica, dry silica, aerogel, mica, and vermiculite.

### (Inorganic Balloon)

A heat insulation material used in the present invention may contain an inorganic balloon as the first inorganic particle.

When the inorganic balloon is contained, the convective heat transfer or the conductive heat transfer of the heat within the heat insulation material can be suppressed in a temperature range of lower than 500°C, and the heat insulation property of the heat insulation material can be further improved.

As the inorganic balloon, at least one kind selected from a whitebait balloon, a silica balloon, a fly ash balloon, a perlite balloon, and a glass balloon can be used.

### (Content of inorganic balloon: 60 mass% or less with respect to total mass of heat insulation material)

The content of the inorganic balloon is preferably 60 mass% or less with respect to the total mass of the heat insulation material.

### (Average particle diameter of inorganic balloon: 1 µm or more and 100 µm or less)

The average particle diameter of the inorganic balloon is preferably 1 µm or more and 100 µm or less.

### <Second Inorganic Particle>

When the heat transfer suppression sheet contains two kinds of inorganic particles, the second inorganic particle is not particularly limited as long as it is different from the first inorganic particle in material, particle diameter, or the like. As the second inorganic particle, an oxide particle, a carbide particle, a nitride particle, an inorganic hydrate particle, a silica nanoparticle, a metal oxide particle, an inorganic balloon such as a microporous particle or a hollow silica particle, a particle composed of a thermally expandable inorganic material, a particle composed of a hydrous porous material, or the like can be used. Details of these are as described above.

Note that, the nanoparticle has extremely low conductive heat transfer, and can maintain an excellent heat insulation property even when a compressive stress is applied to the heat transfer suppression sheet. In addition, a metal oxide particle such as titania has a high effect of blocking radiant heat. Further, when a large-diameter inorganic particle and a small-diameter inorganic particle are used, the small-diameter inorganic particle enters gaps between the large-diameter inorganic particles, leading to a more dense structure, and the heat transfer suppression effect can be improved. Therefore, for example, when the nanoparticle is used as the first inorganic particle, it is preferable that the heat transfer suppression sheet further contains a particle composed of a metal oxide having a diameter larger than that of the first inorganic particle as the second inorganic particle.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking radiant heat in a high temperature range of 500°C or higher. Therefore, titania is most preferably used.

When at least one kind of particle selected from a dry silica particle and silica aerogel is used as the first inorganic particle, and at least one kind of particle selected from titania, zircon, zirconia, silicon carbide, zinc oxide, and alumina is used as the second inorganic particle, in order to obtain an excellent heat insulation performance within a temperature range of 300°C or lower, the content of the first inorganic particle is preferably 50 mass% or more, more preferably 60 mass% or more, and still more preferably 70 mass% or more, with respect to a total mass of the inorganic particles. In addition, the content of the first inorganic particle is preferably 95 mass% or less, more preferably 90 mass% or less, and still more preferably 80 mass% or less, with respect to the total mass of the inorganic particles.

On the other hand, in order to obtain an excellent heat insulation performance within a temperature range of higher than 300°C, the content of the second inorganic particle is preferably 5 mass% or more, more preferably 10 mass% or more, and still more preferably 20 mass% or more, with respect to the total mass of the inorganic particles. In addition, the content of the second inorganic particle is preferably 50 mass% or less, more preferably 40 mass% or less, and still more preferably 30 mass% or less, with respect to the total mass of the inorganic particles.

### (Average primary particle diameter of second inorganic particle)

In the case where the second inorganic particle composed of a metal oxide is contained in the heat transfer suppression sheet, when the average primary particle diameter of the second inorganic particle is 1 µm or more and 50 µm or less, the radiant heat transfer can be efficiently suppressed in a high temperature range of 500°C or higher. The average primary particle diameter of the second inorganic particle is more preferably 5 µm or more and 30 µm or less, and most preferably 10 µm or less.

### (Content of Inorganic Particle)

In the present embodiment, when a total content of the inorganic particle 4 in the heat transfer suppression sheet 10 is appropriately controlled, a sufficient heat insulation property can be ensured in the heat transfer suppression sheet 10.

The total content of the inorganic particle 4 is preferably 60 mass% or more, and more preferably 70 mass% or more, with respect to the total mass of the heat transfer suppression sheet 10. When the total content of the inorganic particle 4 is too large, the content of the organic fiber decreases relatively. Therefore, in order to obtain a sufficient framework reinforcement effect and inorganic particle retention effect, the total content of the inorganic particle 4 is preferably 95 mass% or less, and more preferably 90 mass% or less, with respect to the total mass of the heat transfer suppression sheet 10.

Note that, the content of the inorganic particle 4 in the heat transfer suppression sheet 10 can be calculated, for example, by heating the heat transfer suppression sheet 10 at 800°C, decomposing organic components, and then measuring the mass of the remaining portion.

The heat transfer suppression sheet 10 according to the present embodiment may contain an organic fiber constituted of an organic material different from the first organic material, or an inorganic fiber, in addition to the organic fiber 1, the fusion portion 5, and the inorganic particle 4. When the heat transfer suppression sheet 10 contains an inorganic fiber, inorganic fibers that are preferably contained in the present embodiment will be described below.

### <Inorganic Fiber>

As the inorganic fiber, a single kind of inorganic fiber may be used, or two or more kinds of inorganic fibers may be used in combination. Examples of the inorganic fiber include ceramic-based fibers such as a silica fiber, an alumina fiber, an alumina silicate fiber, a zirconia fiber, a carbon fiber, a soluble fiber, a refractory ceramic fiber, an aerogel composite, a magnesium silicate fiber, an alkaline earth silicate fiber, a potassium titanate fiber, a silicon carbide fiber, and a potassium titanate whisker fiber, glass-based fibers such as a glass fiber, glass wool, and slag wool, rock wool, a basalt fiber, a mullite fiber, and natural mineral-based fibers such as wollastonite as mineral-based fibers other than those listed above.

These inorganic fibers are preferred in terms of heat resistance, strength, easy availability, and the like. Among the inorganic fibers, a silica-alumina fiber, an alumina fiber, a silica fiber, rock wool, an alkaline earth silicate fiber, and a glass fiber are particularly preferred from the viewpoint of handling properties.

The cross-sectional shape of the inorganic fiber is not particularly limited, and examples thereof include a circular cross section, a flat cross section, a hollow cross section, a polygonal cross section, and a core cross section. Among them, an irregular cross-section fiber having a hollow cross section, a flat cross section, or a polygonal cross section can be preferably used since the heat insulation property is slightly improved.

The lower limit of an average fiber length of the inorganic fiber is preferably 0.1 mm, and the lower limit is more preferably 0.5 mm. On the other hand, the upper limit of the average fiber length of the inorganic fiber is preferably 50 mm, and the upper limit is more preferably 10 mm. When the average fiber length of the inorganic fiber is less than 0.1 mm, the inorganic fibers are unlikely to be entangled with each other, and mechanical strength of the heat transfer suppression sheet 10 may decrease. On the other hand, when the average fiber length is more than 50 mm, a reinforcement effect can be obtained, but the inorganic fibers may not be able to entangle tightly with each other, or a single inorganic fiber may curl up, making continuous gaps more likely to occur, and thus there is a risk that the heat insulation property decreases.

The lower limit of an average fiber diameter of the inorganic fiber is preferably 1 µm, the lower limit is more preferably 2 µm, and the lower limit is still more preferably 3 µm. On the other hand, the upper limit of the average fiber diameter of the inorganic fiber is preferably 15 µm, and the upper limit is more preferably 10 µm. When the average fiber diameter of the inorganic fiber is less than 1 µm, there is a risk that the mechanical strength of the inorganic fiber decreases. In addition, from the viewpoint of the influence on human health, the average fiber diameter of the inorganic fiber is preferably 3 µm or more. On the other hand, when the average fiber diameter of the inorganic fiber is larger than 15 µm, solid heat transfer using the inorganic fiber as a medium may increase, resulting in a decrease in heat insulation property, and the moldability and the strength of the heat transfer suppression sheet may deteriorate.

### (Content of Inorganic Fiber)

In the present embodiment, when the heat transfer suppression sheet 10 contains an inorganic fiber, a content of the inorganic fiber is preferably 3 mass% or more and 15 mass% or less with respect to the total mass of the heat transfer suppression sheet 10.

In addition, the content of the inorganic fiber is preferably 5 mass% or more and 10 mass% or less with respect to the total mass of the heat transfer suppression sheet 10. With such contents, a shape retention property, pressing force resistance, wind pressure resistance, and an ability to retain the inorganic particle of the inorganic fiber are exhibited in a well-balanced manner. In addition, when the content of the inorganic fiber is appropriately controlled, the organic fiber 1 and the inorganic fiber are entangled with each other to form a three-dimensional network, so that an effect of retaining the inorganic particle 4 and other blending materials to be described later can be further improved.

### <Other Blending Materials>

Note that, the heat transfer suppression sheet according to the present embodiment may further contain a binding material, a colorant, or the like, if necessary. All of these are useful for reinforcing the heat transfer suppression sheet and improving the moldability, and a total amount thereof is preferably 10 mass% or less with respect to the total mass of the heat transfer suppression sheet.

### [Method for Producing Heat Transfer Suppression Sheet]

An example of a method for producing the heat transfer suppression sheet 10 according to the present embodiment will be described below.

For example, a binder fiber (not shown) having a core-sheath structure and the inorganic particle 4 are charged into a mixer such as a V-type mixer at a predetermined ratio to prepare a mixture.

Note that, as described above, the binder fiber is preferably a fiber having a core-sheath structure, which includes a core portion composed of the first organic material and a sheath portion composed of the second organic material. In this case, the melting point of the first organic material is higher than the melting point of the second organic material.

Thereafter, the obtained mixture is charged into a predetermined mold and pressurized with a pressing machine or the like, and the obtained molded body is heated to melt the sheath portion of the binder fiber. Thereafter, the heated molded body is cooled, whereby the second organic material constituting the molten sheath portion and the inorganic particle 4 present around the binder fiber are fused to the core portion (organic fiber 1), and are also fused to each other in a region where the binder fibers are in contact with each other. In addition, the matrix 14 containing the inorganic particle 4 is formed between a plurality of organic fibers 1. Accordingly, a heat transfer suppression sheet 10 processed into a sheet can be obtained.

Note that, when the above materials are mixed, the organic fibers 1 are partially entangled with each other, so that when the mixture is pressurized and heated, the entangled organic fibers 1 become the fiber bundle 6 in the matrix 14. In addition, since the inorganic particle 4 is difficult to fill between the plurality of organic fibers 1 constituting the fiber bundle 6, the gap 8 is formed between the organic fibers 1.

Even in a region where the plurality of entangled organic fibers 1 are not present, when the mixture is pressurized and heated, the density of the inorganic particles 4 increases, so that a plurality of small pores 7 are formed in the gaps between the inorganic particles 4 in the obtained heat transfer suppression sheet 10. As described above, these gaps 8 and pores 7 can provide the heat transfer suppression effect.

Further, when the above materials are mixed, pressurized, and heated, the entangled organic fibers 1 exposed on the surface are heated to be formed as the fiber layer 11 on the surface of the heat transfer suppression sheet 10. Note that, the fiber layer 11, similar to the fiber bundle 6, improves the strength of the heat transfer suppression sheet 10 and also has an effect of alleviating impacts on the surface of the heat transfer suppression sheet 10.

In the present embodiment, it is preferable to produce the heat transfer suppression sheet 10 by a dry method. In the case of using a dry method, the inorganic particle 4 used is suitable for the dry method, and a solvent such as water, which is necessary for molding in a wet method, is not added to the mixture. However, during the production of the heat transfer suppression sheet 10, in order to prevent a powder such as the inorganic particle 4 from flying around and prevent raw materials from being difficult to handle, a small amount of a solvent such as water can also be added within the range of the dry method. For example, by adding a small amount of a solvent such as water to the mixture, scattering of the inorganic particle during the production can be suppressed.

With the production method according to the present embodiment, since the melting point of the first organic material constituting the core portion is higher than the melting point of the second organic material constituting the sheath portion, when heating the mixture, the sheath portion can be melted while the core portion remains. Then, after cooling, the outer peripheral surface of the core portion (organic fiber 1) is covered with the second organic material including the inorganic particle 4, so that the inorganic particle 4 can be retained. The organic fiber 1 to which the inorganic particle 4 is fused appears to have a larger fiber diameter, and therefore has higher strength than the organic fiber 1 alone. Further, since the binder fiber is present in an irregular direction in the mixture, the organic fibers 1 are fused to each other in the region where the binder fibers are in contact with each other, forming a three-dimensional framework. As a result, the shape of the entire heat transfer suppression sheet can be retained with even higher strength.

Note that, even when an organic fiber without a core-sheath structure is used as the binder fiber, depending on temperature setting, it is possible that only the surface of the organic fiber is melted while a center portion thereof remains, the inorganic particle is deposited on the surface, or the organic fibers are fused to each other. However, during the production of the heat transfer suppression sheet, it is common to perform heating from one side or both sides perpendicular to the thickness direction, and since a material having a high heat insulation performance is used, strict temperature control is required in order to raise the temperature to the same degree on a surface side and on a center side of the sheet in the thickness direction.

With respect to this, when a binder fiber having a core-sheath structure in which the melting point of the first organic material constituting the core portion is higher than the melting point of the second organic material constituting the sheath portion is used, the temperature can be set extremely easily to make the core portion remain and to melt the sheath portion. As a result, the obtained heat transfer suppression sheet has an ideal structure in which the organic fibers 1 are fused to each other to form a framework that retains the strength of the sheet on both the surface side and the center side, and the fusion portion 5 containing the inorganic particle 4 is formed on the surface of the organic fiber 1. Therefore, it is preferable to use the binder fiber having a core-sheath structure as described above as the material for the heat transfer suppression sheet 10.

Note that, an adhesive such as a hot melt powder may be contained in the mixture as a raw material for the heat transfer suppression sheet, and details will be described later. By appropriately adjusting the kind and the content of the adhesive contained in the mixture, the framework formed by the organic fiber 1 is sufficiently fixed, an ability to retain the inorganic particle 4 can be improved, and the powder falling can be further suppressed.

As a result, the heat transfer suppression sheet 10 produced by the production method according to the present embodiment has an even stronger framework, and even when a pressing force or impact is applied to the heat transfer suppression sheet, the shape can be maintained, the powder falling can be suppressed, and an excellent heat insulation performance can be maintained.

Note that, in order to further suppress the powder falling, the surface of the heat transfer suppression sheet 10 may be covered with a film or the like. Examples of a polymer film include a film made of a polyimide, a polycarbonate, PET, p-phenylene sulfide, a polyetherimide, a cross-linked polyethylene, a flame-retardant chloroprene rubber, polyvinylidene fluoride, rigid vinyl chloride, polybutylene terephthalate, PTFE, PFA, FEP, ETFE, rigid PCV, flame-retardant PET, a polystyrene, a polyethersulfone, a polyamide-imide, a polyacrylonitrile, a polyethylene, a polypropylene, and a polyamide. Note that, the method of covering the surface of the heat transfer suppression sheet 10 with a film is not particularly limited, and examples thereof include a method of performing pasting with an adhesive or the like, a method of wrapping the heat transfer suppression sheet 10 in a film, and a method of housing the heat transfer suppression sheet 10 in a bag-shaped film.

Next, the preferred binder fiber and heating conditions used in the method for producing a heat transfer suppression sheet according to the present embodiment will be described.

### <Binder Fiber>

In the present embodiment, when the binder fiber having a core-sheath structure is used, the binder fiber is not particularly limited as long as the melting point of the first organic material constituting the core portion is higher than the melting point of the second organic material constituting the sheath portion. As the first organic material constituting the core portion, at least one kind selected from polyethylene terephthalate, a polypropylene, and nylon can be selected. In addition, as the second organic material constituting the sheath portion, at least one kind selected from polyethylene terephthalate, a polyethylene, a polypropylene, and nylon can be selected.

When the melting point of the first organic material constituting the core portion is sufficiently higher than the melting point of the second organic material constituting the sheath portion, a setting tolerance of the heating temperature in the heating step can be expanded, and the temperature setting for obtaining a desired structure can be made easier. For example, the melting point of the first organic material is preferably 60°C or more higher, more preferably 70°C or more higher, and still more preferably 80°C or more higher than the melting point of the second organic material.

Note that, the binder fiber having a core-sheath structure as described above is generally commercially available, and the materials constituting the core portion and the sheath portion may be the same as or different from each other. Examples of the binder fiber in which the core portion and the sheath portion are constituted of the same material having different melting points include one in which the core portion and the sheath portion are constituted of polyethylene terephthalate, one in which the core portion and the sheath portion are constituted of a polypropylene, and one in which the core portion and the sheath portion are constituted of nylon. Examples of the binder fiber in which the core portion and the sheath portion are constituted of different materials include one in which the core portion is constituted of polyethylene terephthalate and the sheath portion is constituted of a polyethylene, and one in which the core portion is constituted of a polypropylene and the sheath portion is constituted of a polyethylene.

In the present embodiment, the melting point of the second organic material constituting the sheath portion of the binder fiber refers to a melting temperature at which the second organic material begins to undergo melting deformation, and softening accompanied by a change in shape is also considered to be a kind of melting deformation. The melting point of the sheath portion of the binder fiber can be measured, for example, by the following method.

A binder fiber to be measured is disposed in contact with a glass fiber having a higher melting point, heated from room temperature to, for example, 200°C at a heating rate of 5°C/min, and thereafter cooled to room temperature. At this time, when the surface of the binder fiber undergoes melting deformation and is fused at a portion in contact with the glass fiber, or a cross-sectional shape of the binder fiber changes, it can be determined that the melting point of the second organic material constituting the sheath portion is 200°C or lower. In the present embodiment, when the heating temperature is changed variously, and the fusion state of the binder fiber and the glass fiber after cooling by the above method or the cross-sectional shape of the binder fiber is observed, the melting point of the second organic material constituting the sheath portion can be determined.

### (Content of Binder Fiber)

In the present embodiment, in the case where the binder fiber having a core-sheath structure is used as the material, when a content of the binder fiber in the mixture is appropriately controlled, a sufficient framework reinforcement effect can be obtained in the obtained heat transfer suppression sheet 10.

The content of the binder fiber is preferably 5 mass% or more, and more preferably 10 mass% or more, with respect to a total mass of the mixture. When the content of the binder fiber is too large, the content of the inorganic particle 4 decreases relatively. Therefore, in order to obtain a desired heat insulation performance, the content of the binder fiber is preferably 25 mass% or less, and more preferably 20 mass% or less, with respect to the total mass of the mixture.

### <Hot Melt Powder>

In the present embodiment, in addition to the binder fiber and the inorganic particle 4, the mixture may contain a hot melt powder. The hot melt powder is a powder that contains, for example, a third organic material different from the first organic material and the second organic material, and has a property of being melted by heating. By containing the hot melt powder in the mixture and heating the same, when the hot melt powder is cooled after melting, the hot melt powder, including the surrounding inorganic particle 4, hardens. Therefore, the falling off of the inorganic particle 4 from the heat transfer suppression sheet 10 can be further suppressed.

Examples of the hot melt powder include those having various melting points, and it is sufficient to select a hot melt powder having an appropriate melting point in consideration of the melting points of the core portion and the sheath portion of the binder fiber used. Specifically, when the third organic material, which is a component constituting the hot melt powder, has a melting point lower than that of the first organic material constituting the organic fiber, the heating temperature can be set to melt the sheath portion and the hot melt powder while the core portion remains. For example, when the melting point of the hot melt powder is equal to or lower than the melting point of the sheath portion, it is sufficient to set the heating temperature during the production between the melting point of the core portion and the melting point of the sheath portion, so that the heating temperature can be set much more easily.

On the other hand, the kind of the hot melt powder to be used can also be selected such that the melting point of the hot melt powder is between the melting point of the core portion and the melting point of the sheath portion. In the case of using the hot melt powder having such a melting point, when both the sheath portion and the hot melt powder are cooled and harden after melting, the organic fiber (core portion) 1 and the surrounding molten sheath portion, and the hot melt powder present in gaps in the inorganic particle 4 firstly harden. As a result, the position of the organic fiber 1 can be fixed, and thereafter the molten sheath portion is fused to the organic fiber, making it easier to form a three-dimensional framework. Therefore, the strength of the entire sheet can be further improved.

When the melting point of the third organic material constituting the hot melt powder is sufficiently lower than the melting point of the first organic material constituting the core portion, the setting tolerance of the heating temperature in the heating step can be expanded, and the temperature setting for obtaining a desired structure can be made easier. For example, the melting point of the first organic material is preferably 60°C or more higher, more preferably 70°C or more higher, and still more preferably 80°C or more higher than the melting point of the third organic material.

Note that, the melting point of the hot melt powder (third organic material) is preferably 80°C or higher, and more preferably 90°C or higher. In addition, the melting point of the hot melt powder (third organic material) is preferably 180°C or lower, and more preferably 150°C or lower. Examples of the component constituting the hot melt powder include a polyethylene, a polyester, a polyamide, and ethylene vinyl acetate.

### (Content of Hot Melt Powder)

When the hot melt powder is contained in the mixture in order to suppress the falling off of the inorganic particle, the powder falling suppression effect can be obtained even when the content thereof is very small. Therefore, the content of the hot melt powder is preferably 0.5 mass% or more, and more preferably 1 mass% or more, with respect to the total mass of the mixture.

On the other hand, when the content of the hot melt powder is increased, the content of the inorganic particle 4 or the like decreases relatively. Therefore, in order to obtain a desired heat insulation performance, the content of the hot melt powder is preferably 5 mass% or less, and more preferably 4 mass% or less, with respect to the total mass of the mixture.

### <Heating Conditions>

A step of processing the mixture into a sheet includes a step of pressurizing the mixture and a step of heating the mixture. When the binder fiber having a core-sheath structure is used as the material for the heat transfer suppression sheet 10, the heating temperature in the heating step is preferably a temperature higher than the melting point of the second organic material constituting the sheath portion and lower than the melting point of the first organic material constituting the core portion. By setting the heating temperature like this, as described above, the strength of the sheet can be ensured by the core portion both on the surface side and the center side of the sheet, and the inorganic particle 4 can be retained by the fusion portion 5.

Specifically, the heating temperature in the heating step is set to preferably 10°C or more higher, and more preferably 20°C or more higher than the melting point of the second organic material constituting the sheath portion. On the other hand, the heating temperature is set to preferably 10°C or more lower, and more preferably 20°C or more lower than the melting point of the first organic material constituting the core portion.

A heating time is not particularly limited, and it is preferable to set a heating time that allows the sheath portion to be sufficiently melted. For example, it can be set to 3 minutes or longer and 15 minutes or shorter.

When the hot melt powder is contained as a material for the heat transfer suppression sheet, the heating temperature in the heating step is set to preferably 10°C or more higher, and more preferably 20°C or more higher than the higher one of the melting point of the second organic material constituting the sheath portion and the melting point of the third organic material constituting the hot melt powder. On the other hand, the heating temperature is set to preferably 10°C or more lower, and more preferably 20°C or more lower than the melting point of the first organic material constituting the core portion. By setting the heating temperature like this, a strong framework can be formed, the strength of the sheet can be further improved, and the falling off of the inorganic particle 4 can be prevented by the fusion portion 5 and the like.

### <Thickness of Heat Transfer Suppression Sheet>

A thickness of the heat transfer suppression sheet according to the present embodiment is not particularly limited, and is preferably 0.05 mm or more and 10 mm or less. When the thickness is 0.05 mm or more, sufficient compressive strength can be obtained. On the other hand, when the thickness is 10 mm or less, a good heat insulation property of the heat transfer suppression sheet can be obtained.

### [Battery Pack]

An example of a battery pack to which the heat transfer suppression sheet 10 according to the embodiment of the present invention is applied is as shown in Fig. 4 above. Here, a configuration and effects of the battery pack will be specifically described with reference to Fig. 4.

As shown in Fig. 4, the battery pack 100 includes the plurality of battery cells 20a, 20b, and 20c, and the heat transfer suppression sheet according to the present embodiment, and the plurality of battery cells are connected in series or in parallel.

For example, as shown in Fig. 4, the heat transfer suppression sheet 10 according to the present embodiment is interposed between the battery cell 20a and the battery cell 20b and between the battery cell 20b and the battery cell 20c. Further, the battery cells 20a, 20b, and 20c and the heat transfer suppression sheet 10 are housed in the battery case 30.

Note that, the heat transfer suppression sheet 10 is as described above.

In the battery pack 100 configured in this manner, even when a certain battery cell 20a has a high temperature, since the heat transfer suppression sheet 10 having a heat transfer suppression effect is present between the battery cell 20a and the battery cell 20b, it is possible to suppress the propagation of heat to the battery cell 20b.

In addition, since the heat transfer suppression sheet 10 according to the present embodiment has high compressive strength, thermal expansion of the battery cells 20a, 20b, and 20c can also be suppressed during charging and discharging of the battery cells. Therefore, a distance between the battery cells can be ensured, an excellent heat insulation performance can be maintained, and the thermal runaway of the battery cells can be prevented. **In** addition, since it has the powder falling suppression effect, it can be easily handled.

Note that, the battery pack 100 according to the present embodiment is not limited to the battery pack illustrated in Fig. 4. For example, the heat transfer suppression sheet 10 may be disposed not only between the battery cell 20a and the battery cell 20b and between the battery cell 20b and the battery cell 20c, but also between the battery cells 20a, 20b, and 20c and the battery case 30, or may be pasted to an inner surface of the battery case 30.

In the battery pack 100 configured in this manner, when a certain battery cell ignites, it is possible to suppress the flame from spreading to the outside of the battery case 30.

For example, the battery pack 100 according to the present embodiment is used in an electric vehicle (EV) or the like, and is sometimes disposed under a passenger's floor. In this case, even when the battery cell ignites, the safety of the passenger can be ensured.

In addition, since the heat transfer suppression sheet 10 can be disposed not only between the battery cells but also between the battery cells 20a, 20b, and 20c and the battery case 30, it is not necessary to newly prepare a flame retardant material or the like, and a safe battery pack 100 can be easily formed at a low cost.

In the battery pack according to the present embodiment, the heat transfer suppression sheet 10 disposed between the battery cells 20a, 20b, and 20c and the battery case 30 may be in contact with the battery cell or may have a gap therebetween. However, in the case where there is a gap between the heat transfer suppression sheet 10 and the battery cells 20a, 20b, and 20c, even when the temperature of any one battery cell of the plurality of battery cells rises and the volume expands, the deformation of the battery cell is allowable.

Note that, the heat transfer suppression sheet 10 according to the present embodiment can be produced into various shapes depending on the production method. Therefore, it is not influenced by the shapes of the battery cells 20a, 20b, and 20c and the battery case 30, and can be adapted to any shape. Specifically, it can be applied to cylindrical batteries, flat batteries, and the like, in addition to prismatic batteries.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2022-086807) filed on May 27, 2022, and the contents thereof are incorporated herein by reference.

### REFERENCE SIGNS LIST

1 organic fiber
4 inorganic particle
5 fusion portion
6 fiber bundle
7 pore
8 gap
10 heat transfer suppression sheet
11 fiber layer
12 composite layer
13 base layer
14 matrix
20a, 20b, 20c battery cell
30 battery case
100 battery pack

## Claims

1. A heat transfer suppression sheet comprising:
a matrix containing an inorganic particle; and
an organic fiber three-dimensionally oriented in the matrix, wherein
the organic fiber includes a fusion portion covering at least a portion of a surface of the organic fiber, and
the organic fibers are fused to each other by the fusion portion.

2. The heat transfer suppression sheet according to claim 1, wherein the matrix comprises a plurality of pores.

3. The heat transfer suppression sheet according to claim 1, wherein the matrix comprises a fiber bundle formed by at least partially fusing a plurality of the organic fibers to each other by the fusion portion.

4. The heat transfer suppression sheet according to claim 3, wherein a gap is provided between the plurality of the organic fibers constituting the fiber bundle.

5. The heat transfer suppression sheet according to claim 1, comprises a fiber layer on at least a portion of a first surface and a second surface of the heat transfer suppression sheet, the first surface and the second surface being perpendicular to a thickness direction of the heat transfer suppression sheet, wherein the fiber layer is formed by at least partially fusing a plurality of the organic fibers to each other by the fusion portion.

6. The heat transfer suppression sheet according to claim 5, comprises a composite layer between the fiber layer and a base layer including the matrix and the organic fiber, wherein the composite layer comprises the plurality of the organic fibers at least partially fused to each other by the fusion portion and the inorganic particle fused to the organic fibers by the fusion portion.

7. The heat transfer suppression sheet according to claim 1, wherein at least a portion of the inorganic particle is fused to the organic fiber by the fusion portion.

8. The heat transfer suppression sheet according to claim 1, wherein
the organic fiber is composed of a first organic material, and the fusion portion comprises a second organic material, and
a melting point of the second organic material is lower than a melting point of the first organic material.

9. The heat transfer suppression sheet according to claim 8, wherein the melting point of the second organic material is lower than the melting point of the first organic material by 60°C or more.

10. The heat transfer suppression sheet according to claim 8, wherein
the first organic material is at least one kind selected from polyethylene terephthalate, a polypropylene, and nylon, and
the second organic material is at least one kind selected from polyethylene terephthalate, a polyethylene, a polypropylene, and nylon.

11. The heat transfer suppression sheet according to claim 1, wherein the inorganic particle is a particle composed of at least one kind of inorganic material selected from an oxide particle, a carbide particle, a nitride particle, and an inorganic hydrate particle.

12. The heat transfer suppression sheet according to claim 11, wherein the inorganic particle includes at least one kind of particle selected from a dry silica particle and silica aerogel.

13. The heat transfer suppression sheet according to claim 12, wherein the inorganic particle further includes at least one kind of particle selected from titania, zircon, zirconia, silicon carbide, zinc oxide, and alumina.

14. A battery pack comprising:
a plurality of battery cells; and
the heat transfer suppression sheet according to any one of claims 1 to 13, wherein
the plurality of battery cells are connected in series or in parallel.
